# EUROPEAN PATENT APPLICATION

(11) **EP 4 539 296 A1**
(43) Date of publication of application: **16.04.2025**
(21) Application number: 24383068.4
(22) Date of filing: 03.10.2024
(51) Int. Cl.: H02J 7/00, H02J 1/10, H02M 1/00

(54) **DEVICE FOR ELECTRICAL INTERCONNECTION BETWEEN ASSEMBLIES OF ELECTRICAL ENERGY STORAGE MEANS**

(30) Priority: 05.10.2023 ES 202330833
(71) Applicant: Ormazabal Corporate Technology, A.I.E., 48340 Amorebieta-Etxano (Vizcaya) (ES); Mondragon Goi Eskola Politeknikoa Jose Maria Arizmendiarrieta, S.COOP., 20500 Arrasate-Mondragon (Gipuzkoa) (ES)
(72) Inventor: AIZPURU LARRAÑAGA, Iosu, 20500 ARRASATE- MONDRAGON (Gipuzkoa) (ES); ANZOLA GARCÍA, Jon, 20500 ARRASATE- MONDRAGON (Gipuzkoa) (ES); CANALES SEGADE, Jose María, 20500 ARRASATE- MONDRAGON (Gipuzkoa) (ES); GUTIERREZ GRANADOS, Santiago, 48150 SONDIKA (BIZKAIA) (ES)
(74) Representative: Herrero & Asociados, S.L.

(57) **Abstract**

Device (1) for electrical interconnection between assemblies (2) of electric energy storage means (3), each assembly (2) comprising a plurality of electric energy storage means (3) electrically connected in series and provided with at least one cell for storing and supplying electric energy. The device (1) comprises at least one partial power converter (5) for parallel interconnection of said assemblies (2) with at least one direct current connection bus (4). The partial power converter (5) reduces both the active and non-active power to be processed and therefore the power losses generated by the same converter (5) are reduced and the efficiency of the storage system is improved.

## Description

### OBJECT OF THE INVENTION

The invention relates to a device for electrical interconnection between assemblies or packages of electrical energy storage media such as batteries. Specifically, by means of said device, the assemblies of electrical energy storage media are interconnected with each other through at least one power converter, in particular through at least one partial power converter. In this way, the present invention can replace the known connection boxes, hereinafter referred to as "junction boxes", whose main function is to manage the assemblies of electrical energy storage media, and which are currently used to interconnect in parallel the assemblies or packages of electrical energy storage media.

### BACKGROUND OF THE INVENTION

Climate change is currently one of the main challenges facing society. Planet Earth is overheating. According to NASA data, the average temperature in 2020 was 1.02 °C higher than in the period 1950-1980. Scientists agree that anthropogenic emissions of greenhouse gases into the atmosphere, particularly since the Industrial Revolution, are responsible for this change. The main gas, carbon dioxide, comes largely from the energy sector. One of the main tools that has been established to reduce this damage is the energy transition, that is, changing from an energy system based on fossil fuels to one with low or no carbon emissions.

A major contribution to decarbonisation comes from the electrification of consumption, replacing electricity produced from fossil sources with that generated by renewable sources, which makes other sectors, such as transport, cleaner, as well as the digitalisation of networks, which improves energy efficiency. The actions to be taken to carry out the energy transition can be, on the one hand, the replacement of fossil sources with renewable sources (for example, solar or wind) and, on the other hand, the development of new technologies such as storage of energy, hydrogen, the electrification of some sectors, the digitalization of electrical networks, etc.

Large-scale electrical energy storage systems are able to compensate for the intermittency of sources such as solar and wind, as the action of the sun and wind is known to be variant. These large-scale electrical energy storage systems are also essential to ensure that essential operations continue in the event of power outages, as for example in facilities such as data centers, hospitals, airports, utilities, oil and gas facilities, or railroads, that cannot operate without a backup power supply with 100% reliability. Even factories and businesses have backup power systems for their emergency systems, alarms and controls, emergency lighting, and vapor control and fire prevention systems.

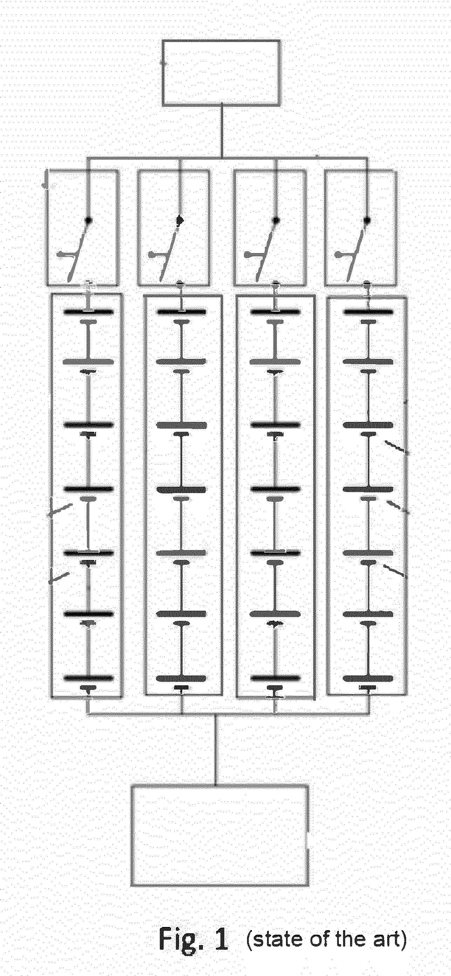

In this sense, there are electric energy storage plants where a plurality of electric energy storage media are arranged, such as batteries, which can be powered by various energy sources. The electric energy storage media can be grouped in assemblies or packages (also called strings) and electrically connected to each other in series within each assembly, as shown in Figure 1, which represents the state of the art.

As shown in Figure 1, the different assemblies of electrical energy storage media are interconnected in parallel by a device whose main function is to manage the assemblies of electrical energy storage media. This device, called a junction box, is necessary to connect the electrical energy storage media to the inverter that will then supply power to the load, such as an electric vehicle. The well-known junction box connects each assembly of batteries to a direct current connection bus, as shown in Figure 1, where the inverters that supply power to the loads are connected.

Such junction boxes consist mainly of electromechanical elements. The traditional junction box is a relay box or a switch box with power contactors that connects all battery packs to the charging inverter, motor or battery charger. There is no active electronics inside the junction box.

Accurate measurement of voltage, temperature and current is critical when assessing the state of charge or condition of each battery in a system and in the state of the art the so-called junction box or the device that interconnects the different assemblies of batteries does not provide this control of voltage, temperature (heat is the main cause of battery failures) and current. To maximize the possible estimation of the remaining battery capacity (SOC) or the state of health of the battery (SOH) of each cell for storage and delivery of electrical energy, it is of utmost importance to accurately measure voltage, temperature and current. Batteries are made up of multiple cells connected in series and their cell charge differs due to different chemical imbalances that occur during manufacturing, position in the battery (where heating varies) and changes related to use or longevity. For example, a voltage difference between cells indicates an unbalanced cell at the system level and this can affect how long the battery pack will last in terms of power output, as well as the life of each individual cell and the life of the battery pack.

Another disadvantage of using the device interconnecting the different assemblies of batteries or the use of the so-called junction box of the state of the art is that it does not prevent the recirculation of current between the different assemblies or strings of batteries. Since the different assemblies or strings of batteries are interconnected in parallel and since the batteries are not identical (intrinsic imperfections of the materials, small variations in manufacturing, in addition to the different physical factors that affect the batteries, mean that no two batteries are the same), a closed circuit is created between the batteries, which allows the passage of imbalance currents (due to the differences between batteries and connections) that circulate from one battery to another to try to balance them. This recirculation of current between the different assemblies or strings of batteries occurs permanently even if there is no consumption connected and therefore accelerates the degradation process of the batteries. The greater the differences between batteries and connections, the greater the current recirculation between the different assemblies or strings of batteries and the greater the degradation produced.

Likewise, through the well-known device interconnecting the different assemblies of batteries or the so-called junction box does not allow each assembly of batteries or "string" of batteries to be controlled independently, for example to check the ageing or degradation of the batteries, charge level, etc., which prevents a good maintenance plan from being carried out and therefore increases the risk of the batteries failing prematurely. Likewise, not being able to control each assembly of batteries or "string" of batteries independently does not allow the voltage of the assembly or "string" of batteries to be adapted to the voltage required by the inverter that supplies the load. Battery manufacturers recommend carrying out serious and active maintenance to prolong the life of the batteries as much as possible and this is not possible if the batteries or the assembly of batteries cannot be controlled independently. By not carrying out an independent control of the batteries, it may happen that at some point a battery or assembly of batteries is found to be damaged and is not replaced or repaired because its poor condition was not detected, which will cause damage to the rest of the batteries due to the load they produce on them and also modifying the appropriate charging voltages of the batteries in good condition. Finally, when the batteries that were in poor condition are exhausted, they must be replaced by new ones that must coexist with the previous batteries that have already had a lifespan and have been misused, so they will continue to be a burden on the most recently acquired batteries. And so, a loop is entered where the life of the new batteries is degraded rapidly when combined with old batteries. In short, when one battery in a assembly of batteries fails, the entire assembly shortens its useful life. A single defective battery raises the charging voltage of the adjacent batteries and this affects the useful life of the entire assembly.

On the other hand, there is literature on power converters and their various applications, including the application in electrical energy storage systems (called "Energy Storage System" (ESS)), that refers to solutions for the interconnection of batteries or assemblies of batteries in parallel using power converters. For example, the document "Parallel Operation of Battery Power Modules" by Chin-Sien Moo, et al., published in IEEE TRANSACTIONS ON ENERGY CONVERSION, VOL. 23, NO. 2, JUNE 2008, deals with improvements in the management of the electric power system that includes the operation of batteries in parallel and the advantages that power converters provide in this regard. Also, the document "Adaptive Droop based Control Strategy for DC Microgrid Including Multiple Batteries Energy Storage Systems" by Seydali Ferahtia et al. published in the JOURNAL OF ENERGY STORAGE 48 (2022) 103983, which mentions that the life cycle of batteries increases with adequate management of shared power and for this purpose each battery output is controlled by bidirectional power converters (DC/DC) that guarantee the charging and discharging process. In fact, the results obtained demonstrate the ability of this power control strategy to guarantee the proportional distribution of power, while controlling the instability of the residual energy (SOC) between the battery cells and improving its state of health (SOH).

It is known that by using power converters it is possible to carry out a control of voltage, current and temperature, in such a way that it is possible to estimate the remaining capacity of the batteries (SOC) or their state of health (SOH). Likewise, the recirculation of current between the different assemblies or strings of batteries is avoided and each battery and assembly of batteries or "string" of batteries is controlled independently, thus being able to carry out a control of the aging or degradation of the batteries, charge level, etc., at the level of each battery or assembly of batteries, thus avoiding, for example, that a single defective battery affects the useful life of the rest of the batteries or assembly of batteries.

However, the use of power converters to interconnect a plurality of battery assemblies in parallel involves a number of drawbacks. Depending on the architecture of the power converter used, there may be a number of advantages/disadvantages that can affect system performance, size and cost. Power converters are used to process high power values, but their size, cost and performance are key factors that must be optimized through their design. In this regard, for example, regarding the use of power converters with full power processing architecture for the interconnection of battery assemblies in parallel, there is the drawback that this type of power converter processes 100% of the power going from the energy source (in this case batteries) to the load and this increases the power losses generated by the power converter and reduces the efficiency of the system. Likewise, the greater the power processed by the converter, the larger its size, especially with regard to the magnetic parts of the converter (such as the inductor and transformer), the greater the volume occupied by these parts and the higher the total cost of the converter.

### DESCRIPTION OF THE INVENTION

The present invention relates to an electrical interconnection device between assemblies or packages of electrical energy storage media, such as batteries, for use in electrical energy storage systems (ESS) and which aims to solve each and every one of the problems mentioned above. Each assembly comprises a plurality of electrical energy storage means electrically connected in series and provided with at least one cell for storing and supplying electrical energy. The assemblies of electrical energy storage means can be electrically supplied by different sources of electrical energy, such as renewable sources such as solar, wind, hydroelectric, oceanic, etc., or they can be supplied and therefore be connected to the same medium/high voltage electrical network.

In accordance with the present invention, the different assemblies of electrical energy storage means are interconnected in parallel with each other by means of at least one partial power converter, its main function being to control the flow of power and the level of current and voltage between an energy source and a load. Therefore, unlike the state of the art, the interconnection device of the present invention uses active electronic components that can control the flow of electricity in an electrical or electronic circuit, thereby improving the safety and management of the interconnection system, and ultimately of the entire electrical energy storage system (ESS).

In this sense, the use of the partial power converter to interconnect the different assemblies of electrical energy storage media enables the measurement/control of voltage, current and temperature, and thus enables the estimation of the remaining battery capacity (SOC) or battery state of health (SOH) of each electrical energy storage and delivery cell comprising the batteries or similar electrical energy storage media. Improved accuracy of voltage and current measurements will directly promote optimal utilization of electrical energy storage media.

Also, since this is an interconnection device in which active electronic components are used to control the flow of current, it is avoided the recirculation of current between the different assemblies of electrical energy storage media, also avoiding its accelerated degradation process.

On the other hand, the use of the partial power converter allows for independent control of each assembly of electrical energy storage means, thus making it possible to carry out a good maintenance plan, carrying out a control of aging or degradation of the batteries, charge level, etc. In this way, it is possible to avoid that a single electrical energy storage means or defective battery affects the useful life of the entire assembly. Likewise, carrying out independent control of each assembly of electrical energy storage means makes it possible for the voltage that reaches the inverter supplying the load to always be the voltage required by said inverter, that is, the electrical interconnection device or partial power converter of the present invention makes it possible to adapt the voltage of at least one assembly of electrical energy storage means to the voltage required by said inverter, for example in the case where an inverter is replaced by a new inverter and the latter requires a different voltage.

Furthermore, the fact that the electrical interconnection device between assemblies of electrical energy storage media uses partial power converters (partial power processing architecture power converters, PPP) to interconnect said assemblies in parallel, comprises a series of advantages compared to the use of power converters of another type of architecture, such as power converters with full power processing architecture (FPP).

The main advantage is that the partial power converter reduces both the active and non-active power to be processed and therefore the power losses generated by the converter itself are reduced and the efficiency of the storage system is improved. Partial power converters process a maximum of 40% of the total power flowing from the power supply to the load and consequently the efficiency achieved is always better than that obtained by power converters with FPP architecture. In fact, this value is reduced with the passage of time in which the load is supplied by the electrical energy storage system. Also, as regards the size of the magnetic parts of the partial power converter (inductor and transformer), a volume reduction of at least 65% is obtained compared to converters with other different architectures. Therefore, the advantages offered by partial power converters are very suitable for present and future applications, such as for example electrical energy storage systems (ESS) connected to renewable energy sources.

Preferably the interconnection device of the invention comprises a partial power converter for each assembly of electrical energy storage media, thus interconnecting each assembly of electrical energy storage media to a direct current connection bus by means of a partial power converter. The partial power converter is also of isolated topology, which may comprise an "Input-Series-Output-Parallel" (ISOP) architecture or an "Input-Parallel-Output-Series" (IPOS) architecture.

### DESCRIPTION OF FIGURES

Figure 1.- Shows an interconnection device between assemblies of electrical energy storage media of the current state of the art, using the junction box for this purpose.
Figure 2.- Schematically shows the main elements of the electrical interconnection device between assemblies of electrical energy storage media of the invention according to a first embodiment.
Figure 3.- Schematically shows the main elements of the electrical interconnection device between assemblies of electrical energy storage media of the invention according to a second embodiment.

### PREFERRED EMBODIMENT OF THE INVENTION

Several examples of preferred embodiments are described below with reference to the figures cited above, without limiting or reducing the scope of protection of the present invention.

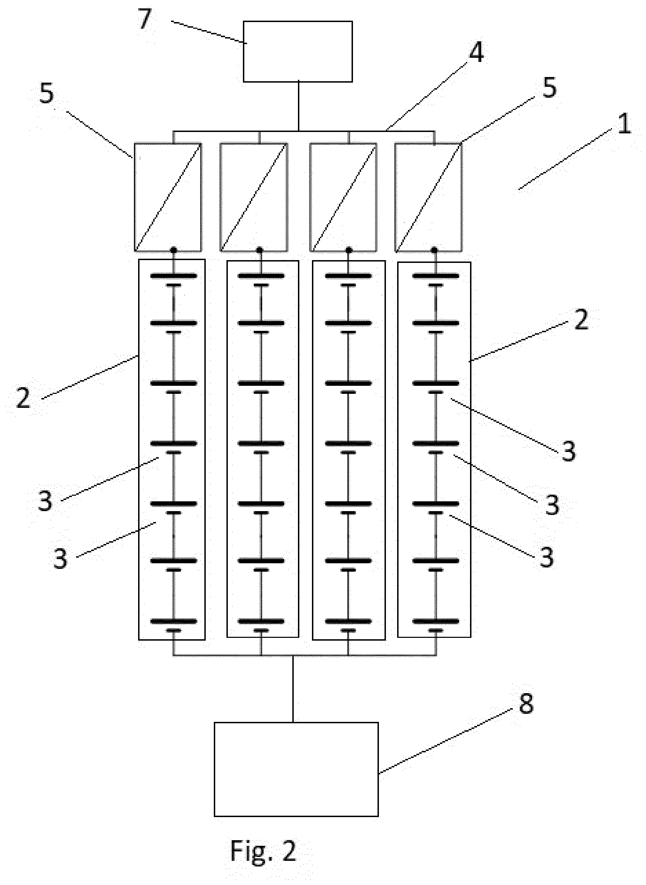

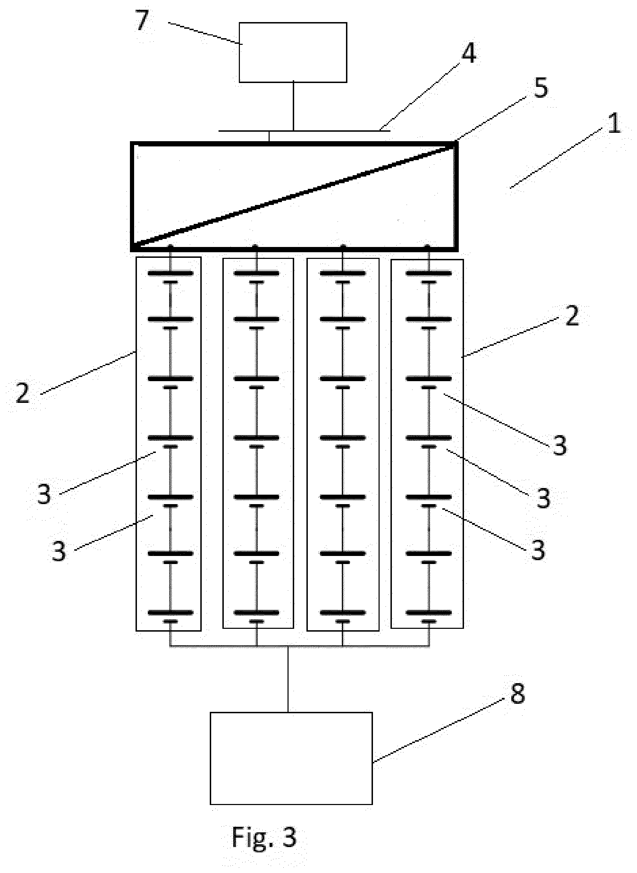

As shown in Figures 2 and 3, the invention relates to a device (1) for electrical interconnection between assemblies (2) of electrical energy storage means (3). Each of the assemblies (2) in turn comprises a plurality of electrical energy storage means (3), electrically connected in series and provided with at least one cell for storing and supplying electrical energy.

The assemblies (2) can be powered by an energy source (8). Said energy source (8) can be for example a renewable source such as solar, wind, hydroelectric, oceanic, etc. Alternatively, the energy source (8) can be directly a medium/high voltage electrical network.

The different assemblies (2) are interconnected in parallel with each other by means of at least one partial power converter (5), its main function being to control the power flow and the current and voltage level between the energy source (8) and an electrical load (7).

Figure 2 shows a first embodiment of the invention, wherein the device (1) comprises a partial power converter (5) for each of the assemblies (2). In this way, by means of said converter (5) each of the assemblies (2) is interconnected, and therefore their respective electrical energy storage means (3), with a direct current connection bus (4).

On the other hand, Figure 3 shows a second embodiment of the invention, wherein the device (1) comprises a single partial power converter (5) that connects all the assemblies (2), and therefore their respective electrical energy storage means (3), with the direct current connection bus (4).

In both the first and second embodiments, shown respectively in Figures 2 and 3, the partial power converter (5) is of isolated topology, which may comprise an "Input-Series-Output-Parallel" (ISOP) architecture or an "Input-Parallel-Output-Series" (IPOS) architecture, allowing the partial power converter (5) to carry out independent control of each assembly (2) of electrical energy storage means (3).

## Claims

1. Device (1) for electrical interconnection between assemblies (2) of electrical energy storage means (3), each assembly (2) comprising a plurality of electrical energy storage means (3) electrically connected in series and provided with at least one cell for storing and supplying electrical energy, the device (1) being **characterized in that** it comprises at least one partial power converter (5) for parallel interconnection of said assemblies (2) with at least one direct current connection bus (4).

2. Device (1) for electrical interconnection according to claim 1 which comprises a partial power converter (5) for each assembly (2) of electrical energy storage means (3), for interconnection of each of the assemblies (2) with the connection bus (4).

3. Device (1) for electrical interconnection according to claim 1 or 2 wherein the partial power converter (5) allows independent control of each assembly (2) of electrical energy storage means (3).

4. Device (1) for electrical interconnection according to claim 3 wherein the partial power converter (5) is of isolated topology.

5. Device (1) for electrical interconnection according to claim 4 wherein the power converter (5) comprises an "Input-Series-Output-Parallel" (ISOP) architecture.

6. Device (1) for electrical interconnection according to claim 4 wherein the power converter (5) comprises an "Input-Parallel-Output-Series" (IPOS) architecture.
